# EUROPEAN PATENT APPLICATION

(11) **EP 1 806 676 A2**
(43) Date of publication of application: **11.07.2007**
(21) Application number: 06256176.6
(22) Date of filing: 04.12.2006
(51) Int. Cl.: G06F 21/02

(54) **Secure tape**

(30) Priority: 05.12.2005 US 295256
(71) Applicant: QUANTUM CORPORATION, San Jose, CA 95110 (US)
(72) Inventor: O'Malley, Mark, Boulder, CO 80304 (US); Toomey, Rick, Bonsall, CA 92003 (US); Barbian, Douglas F., Lakewood, CO 80232 (US); Klomp, Charles, Boulder, CO 80301 (US); Mulder, Curtis, Boulder, CO 80303 (US); Cox, Steve, Firestone, CO 80504 (US)
(74) Representative: Charig, Raymond Julian

(57) **Abstract**

Data stored on a removable storage medium such as a tape cartridge can be protected from unauthorized access by storing a password hash value in a protected manner on the storage medium, where the password hash value is generated from a password by a one-way hash function such as SHA-256, so that the password cannot easily be determined from the hash value. A media drive is then equipped with logic for blocking access to the data unless the password is provided. The password is protected from unauthorized access because the password hash value, not the password itself, is stored on the storage medium.

## Description

### BACKGROUND

### Field of the Invention:

The present invention relates generally to data security, and more specifically to data security for storage media.

### Description of the Related Art:

Data stored on data storage media such as magnetic tape can typically be read by any person who has access to the tape and a tape drive for reading the tape. It is desirable, however, to be able to protect storage media with a password to prevent unauthorized users from reading or writing data on the tape.

Currently, if one has the correct media drive, e.g., a tape storage unit, and obtains tape cartridges or other storage media appropriate for that drive, then data on any tape can be written and read essentially without restriction. The restrictions that have been provided, such as read or write protect switches, or passwords protection schemes, can generally be circumvented purposefully or accidentally.

Existing password protection schemas are offered by independent software vendors in their data backup software applications. These password protection schemes restrict access to the data on a tape by requiring a password to be entered on a host computer before specific data sets can be written or read. While this method works within the IT data storage center, it provides no protection outside the IT data storage center, because protection is only provided at the software application level, and the tapes can be read directly outside of the software application. Once the data storage tape is shipped out for long term archiving there is no prevention from unauthorized agents reading or modifying the data on the tape.

There is an increase in legislation mandating better control and limiting access to personal data. For instance, California bill 1386 was introduced recently whereby all people impacted or even thought to be impacted by a breach of security and/or loss of their personal data must be notified. Therefore it would be desirable to have a stronger password protection feature to assist in the security of personal data so that if a data cartridge is lost, a credible argument can be made that none of the data has been compromised.

### SUMMARY OF THE INVENTION

In general, in a first aspect, the invention features a media drive for receiving a media carrier. The media drive includes hashing logic for generating a hashed value based upon a plaintext value received by host interface logic and read-write logic for storing a hashed tape password on a storage medium, wherein the hashed tape password is generated by the hashing logic based upon a plaintext password, and the storage medium is associated with the media carrier.

Embodiments of the invention may include one or more of the following features. The hashing logic may include a hash function. The hash function may be based on the Secure Hash Algorithm. The storage medium may include tape, which can be either magnetic or magneto-optical tape. The storage medium may be a disk, such as a magnetic or magneto optical disk. The read-write logic may retrieve a previously-stored hashed tape password from the storage medium, and the media drive may also include password comparison logic for comparing the previously-stored hashed tape password to a hashed drive password generated by the hashing logic based upon a plaintext drive password received by the host interface logic, and data access logic for allowing a host to access data stored on the storage medium if the hashed tape password is equivalent to the hashed drive password. Allowing the host to access data may include allowing the host to read and write the data stored on the storage medium.

The media drive may also include a memory having a drive password memory location for storing a drive password received by the host interface logic, where the hashed drive password is generated by the hashing logic further based upon the drive password stored in the memory location. The memory may be a Random Access Memory.

The read-write logic may retrieve the hashed tape password from the storage medium, and the media drive may also include a memory that has a drive password memory location for storing a drive password received by the host interface logic, and password comparison logic for comparing the hashed tape password retrieved from the storage medium to a hashed drive password, where the hashed drive password is generated by the hashing logic based upon the drive password stored in the memory location, and data access logic for allowing a host to access data stored on the storage medium if the hashed tape password is equivalent to the hashed drive password.

The media drive may also include an attempt counter for counting the number of times an invalid plaintext drive password is received while a tape is loaded in the media drive, where the data access logic can deny access to data stored on the storage medium if the counter is greater than a threshold value. The attempt counter may count the number of times an invalid plaintext drive password is received while a tape is loaded in the media drive, and the media drive may also include media carrier unload sensing logic for detecting unloading of the media carrier from the media drive, and access failure counting logic for incrementing the counter if the hashed tape password is not equivalent to the hashed drive password, and for setting the counter to zero if the media carrier is unloaded. The threshold value may be 35.

In general, in a second aspect, the invention features a media drive for receiving a media carrier. The media drive includes read-write logic which can retrieve a hashed tape password from the storage medium, a memory having a drive password memory location for storing a drive password received by host interface logic, hashing logic for generating a hashed drive password based upon a plaintext drive password received by the host interface logic, password comparison logic for determining if the hashed tape password matches the hashed drive password, and data access logic for allowing a host to access data stored on the storage medium if the hashed tape password matches the hashed drive password.

In general, in a third aspect, the invention features a method for securely protecting a storage medium accessible by a media drive. The method includes the steps of reading a plaintext tape password from a host, generating a hashed tape password based upon the plaintext tape password, and writing the hashed tape password to the storage medium.

In general, in a fourth aspect, the invention features a method for securely accessing data stored on a password-protected storage medium accessible by a media drive. The method includes the steps of receiving a request to access data on a storage medium, receiving a plaintext drive password, generating a hashed drive password based upon the plaintext drive password, reading a hashed tape password from the storage medium, comparing the hashed drive password to the hashed tape password; and if the hashed tape password matches the hashed drive password, accessing data on the storage medium to fulfill the request.

Embodiments of the invention may include one or more of the following features. The plaintext drive password may be received from a host. The plaintext drive password may be received from a drive password memory location. Generating the hashed drive password may be further based upon a hash function. The hash function may be based upon the Secure Hash Algorithm. The method may further include the step of blocking access to the storage medium if more than a threshold number of invalid drive passwords are received. The threshold number may be 35. The method may further include the step of denying access to the storage medium if more than a threshold number of invalid drive passwords are received between loading and subsequent unloading of the storage medium from the media drive.

### BRIEF DESCRIPTION

Figure 1 is an illustrative drawing of a storage system according to one embodiment of the invention.

Figure 2 is an illustrative drawing of a data security mode page according to one embodiment of the invention.

Figure 3 is a flowchart illustrating a method of storing a password on a storage medium according to one embodiment of the invention.

Figure 4 is a flowchart illustrating a method of accessing data on a password-protected storage medium according to one embodiment of the invention.

### DETAILED DESCRIPTION

The following description is presented to enable any person skilled in the art to make and use the invention, and is provided in the context of particular applications and their requirements. Various modifications to the preferred embodiments will be readily apparent to those skilled in the art, and the generic principles defined herein may be applied to other embodiments and applications without departing from the spirit and scope of the invention. Moreover, in the following description, numerous details are set forth for the purpose of explanation. However, one of ordinary skill in the art will realize that the invention might be practiced without the use of these specific details. In other instances, well-known structures and devices are shown in block diagram form in order not to obscure the description of the invention with unnecessary detail. Thus, the present invention is not intended to be limited to the embodiments shown, but is to be accorded the widest scope consistent with the principles and features disclosed herein.

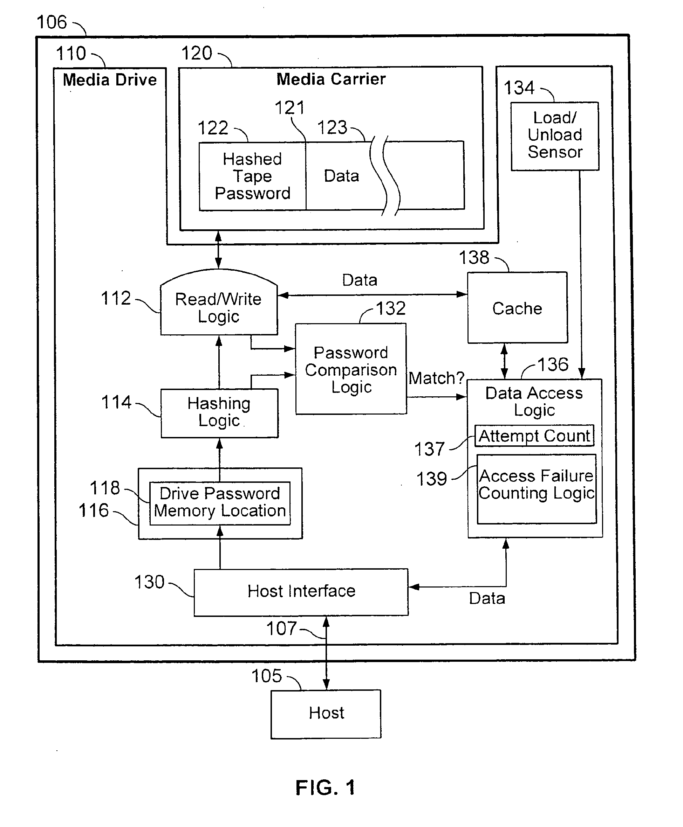

Figure 1 is an illustrative drawing of a storage system 106 according to one embodiment of the invention. The storage system 106 is, for example, a tape library, and may include at least one media drive 110. A media drive 110 is, for example, an electro-mechanical device such as a tape drive that directly controls, writes data 123 to, and reads data 123 from a storage medium 121, such as a tape housed in a removable media carrier 120. According to one example, the media drive 110 may be a disk drive that directly controls, writes to, and reads from the storage medium 121 in the form of a magnetic or optical disk or the like. The media carrier 120 may be, for example, a cartridge or a cassette. The storage system 106 may be coupled to a host system 105, which transmits read and write commands to host interface logic 130 of the media drive 110 via a host/storage communication link 107.

The host 105 may be, for example, a computer which communicates with the media drive 110 and provides the data 123 to be stored on the media drive 110. The media drive 110 may have other interfaces in addition to the host interface 130. For example, there may be an automation interface (not shown) which receives input/output commands from an automated system (not shown), such as an administrative software program. The logic components of the media drive 110 shown in Figure 1 provide for storage of the data 123 by transferring the data 123 from the host 105 to the storage medium 121. Similarly, the logic components provide for retrieval of the data 123 by transferring the data 123 from the storage medium 121 to the host 105. More specifically, in one example, the logic components provide for storage and retrieval of the data as follows. Data to be stored is transferred from the host 105 through the host interface 130, then through data access logic 136 which checks for a valid drive password. If a valid drive password is present, the data access logic 136 allows the data to pass through to an optional cache memory 138, if the cache memory 138 is present. The cache memory 138 may store some or all of the data for later lookup, to improve performance by allowing the data to subsequently be retrieved from the relatively highspeed cache memory rather than being retrieved from the relatively slower storage medium 121. The data then passes through the read/write logic 112, which writes the data to the storage medium 121 in the media carrier 120. Data to be retrieved is transferred between the logic components in the reverse direction, starting at the read/write logic 112 if the data to be retrieved is not in the cache 138, or starting at the cache 138 if the data to be retrieved is in the cache 138. If the data to be retrieved is not in the cache 138, the read/write logic 112 reads the data 121, then transfers the data to the cache 138, which may store the data for subsequent retrieval as described above. Next, the cache transfers the data to the data access logic 136, which transfers the data through to the host interface 130 if a valid drive password is present.

In one example, because of the arrangement of the data access logic 136 between the host interface 130 and the cache 138, data can only be written to the cache 138 (and thereafter to the storage medium 121) if the data access logic allows the data to pass through, which only happens if the password in the drive password memory location 118 is valid. Furthermore, the cache 138 can be preloaded with data automatically at media carrier 120 load time. However, this preloaded data cannot be read by the host 105 through the host interface 107 without first checking the data access logic for password validity.

The host interface 130, in turn transfers the data through to the host 105. Data transfers are performed using, for example, data bus logic (not shown) in the media drive 110. The data bus logic implements the connections shown by the arrows between the logic components. The logic components, e.g., the hashing logic 114, the read/write logic 112, the data bus logic, the password comparison logic 132, and the access failure counting logic 139, can be implemented in software, firmware, hardware, or a combination thereof.

A tape password can be added to the storage medium 121 to protect the data 123 stored on the same storage medium 121 from read, write, or read and write access by users who do not know or have the tape password. To add a tape password to the storage medium 121, a user provides a new tape password to the host 105, and the host 105 sends the new tape password to the drive 110 via the host interface 130 using a drive command that indicates password protection is to be enabled. The drive command is described in more detail below. With respect to Figure 1, when the drive 110 receives a request to add password protection to the storage medium 121 in the media carrier 120, the new tape password is optionally stored in a drive password memory location 118 of a memory 116 for later use in accessing the storage medium 121. Next, hashing logic 114 generates a hash value based on the new drive password, and the read/write logic 112 writes the hash value to the storage medium 121 in a defined location, e.g., at a defined position on a tape, as the hashed tape password 122.

Password protection is enforced by data access logic 136, which ensures that the data 123 can only be accessed by a requesting entity, e.g., the host 105, if the requesting entity has provided a valid drive password. The requesting entity submits the drive password via an interface, e.g., via the host interface logic 130. The drive password must match the tape password previously associated with the storage medium 121. More precisely, for a drive password to be considered valid, a hash value generated from the drive password using the hashing logic 114, must be equivalent to a hash value generated from the tape password using the same hashing logic 114 (or other logic with equivalent behavior). The hashing logic 114 may be based on, for example, the Secure Hash Algorithm, and more specifically, on a specific variant of the Secure Hash Algorithm, such as SHA-256, SHA-512, or the like. The hashing logic 114 may be based on other hash algorithms. The data access logic 136 operates in conjunction with the password comparison logic 132 and the hashing logic 114 to check the validity of a plaintext drive password submitted by the host 105 by generating a hashed drive password, which is hash value for the plaintext drive password, and comparing the hashed drive password to the hashed tape password 122 read from the storage medium 121 by the read/write logic 112. The hashed tape password 122 is a hash value for a previously-supplied tape password.

The password comparison logic 132 compares the hashed tape password previously stored on the storage medium 121 to the hashed drive password generated by the hashing logic 114 from the plaintext drive password. If the hashed tape password is equivalent to the hashed drive password, then the data access logic 136 allows the host 105 (or other requesting entity) to access, i.e., read or write, data stored on the storage medium 121.

The plaintext drive password submitted by the host 105 may optionally be stored in the drive password memory location 118 in the memory 116 to allow the host 105 to repeatedly access the data 123 while the media carrier 120 remains loaded in the drive 110. In this case, the drive password memory location 118 will provide the plaintext drive password to the password comparison logic 132 when a password check is needed, e.g., when data is written or read to or from the tape. The drive password memory location 118 will retain the drive password for a period of time, typically as long as the media carrier 120 remains loaded in the drive 110 and the drive is not powered off. The memory 116 may be, for example, a volatile Random Access Memory. The drive password memory location 118 is typically cleared when the media drive 110 is shut down, turned off, or otherwise loses power. The drive password in the memory location 118 may expire after a certain period of time has passed, at which point the host may be required to supply the drive password again.

Alternatively, the drive password memory location 118 may store the hashed drive password produced by the hashing logic 114 instead of the plaintext drive password, in which case the drive password memory location 118 would be placed between the hashing logic 114 and the password comparison logic 132, but operation would otherwise be essentially as described herein.

In one example, the hashing logic 114 generates the same hash value (i.e., hashed password) for each invocation for a particular input value (i.e., plaintext password) and does not generate the same hash value for two different input values. Furthermore, given the hashed value produced by the function, e.g., the hashed tape password, determining the input to the function, e.g., the plaintext password, should be nearly impossible. That is, hashing logic 114 is based upon a hash function or hash algorithm which is designed to be a one-way function that maps input to output, where, given an output value, determining the input value that produced the output value is nearly impossible.

Two hash values, i.e., hashed passwords, match or are equivalent if they both have the same value, i.e., they both consist of the same characters, bytes, or bits, or if particular defined subsets of both values consist of the same characters, bytes, or bits. For example, a plaintext password with the value "Secret" could be provided by a user to protect a tape. The value "Secret" would be received by the host interface logic, and a corresponding hashed tape password would be generated by the hashing logic. The hashed tape password would be, for example, "G3SD5Y9". The same value would be produced every time the hashing logic generates a hash value for the input "Secret". The hashed tape password "G3SD5Y9" would be stored on the tape by the read/write logic. Subsequently, when data is to be read from or written to the tape, a drive password received from the user (or from an automated program requesting the data) is supplied by the host interface (or by a memory, as described below) to the hashing logic. The hashing logic generates a hashed drive password for the drive password. If the drive password has the value "Secret", then the hashing logic will generate a hashed drive password with the value "G3SD5Y9", which is equivalent to the hashed tape password, and the password comparison logic will produce a result indicating that the passwords are equivalent, and data access can be allowed. However, if the drive password has any other value, e.g., "Secrets", then the hashing logic will generate a hashed drive password with a value such as "YX43H4T" that is not equivalent to the hashed tape password "G3SDSY9''. In that case, the password comparison logic will indicate that the passwords are not equivalent, and data access will not be allowed. The drive password "Secret" can be stored in the drive password memory location 118 to allow the hashing logic to access the drive password so that password validation can be performed subsequently to receipt of the drive password from the host 105 by without requiring the host 105 to supply the password, as long as the media cartridge 120 remains loaded in the drive 110. In one example, attempts to remove the drive from the secured storage area will result in the drive losing the value of the drive password. The drive may detect such removal by, for example, detecting disconnection of the link 107 from the host 105, and may set the contents of the drive password 118 to zeroes when removal occurs.

To prevent attempts at unauthorized access by trying large numbers of passwords or all possible passwords, the data access logic 136 may include an attempt counter 137 to limit the number of access attempts. The attempt counter counts the number of times an invalid plaintext drive password is received while a media carrier 120 is loaded in the media drive 110. The attempt counter 137 is initially zero, and the access failure counting logic 139 increments the attempt counter by 1 each time an invalid plaintext drive password is received (i.e., a password for which the hash valued does not match or is not equivalent to the hash value stored on the tape). If a valid password is received, the access failure counting logic resets the attempt counter to zero. If the value of the attempt counter exceeds a certain threshold (e.g., 35), then the data access logic 136 will deny the host 105 access to the data 123 until the media carrier 120 is unloaded and reloaded, e.g., by physically removing the media carrier 120 from the media drive, or by some other intervention. The data access logic 136 denies access to the data by not allowing the data to pass through the data access logic 136. Media carrier unload sensing logic 136 detects unloading of the media carrier 120 from the media drive 110 and sends an unload signal to the access failure counting logic 139 each time the media carrier 120 is unloaded, and a load signal each time the media carrier 120 is loaded (i.e., inserted). A different media carrier 120, which may have a different hashed tape password 122, may be loaded, in which case the host will generally be required to supply a new drive password for the newly loaded media carrier. The access failure counting logic 139 resets the attempt counter 137 to zero each time the media carrier 120 is loaded into or unloaded from the media drive 110.

To further prevent attempts at unauthorized access using pre-computed dictionary attacks based on a dictionary of all possible values for the password , a random 64-bit salt value is added to the password using numeric addition prior to hashing and storing the hash value on tape. The salt value is stored, e.g., in the media drive, so that it can be subtracted from the hashed value when verifying a password. In a dictionary attack, a dictionary of candidate passwords would be generated, and a hash value for each password would be computed using the same method that the hashing logic 114 uses. Each hash value would be compared to the hashed tape password, and, if a match were found, then the candidate password corresponding to the matching hash value would be the drive password, which the attacker could the use to access the data 123.

The drive password is32 bytes in length, so the dictionary would have a list of 32 character words and their corresponding hash values. Adding the 64 bit random "salt" value to the password increases the number of dictionary entries that an attacker would have to generate. In this case, an attacker would have to compute up to 18446744073709551615 (4 billion dictionary entries to obtain the drive password to enter at the host given the hashed value of the password on tape (a 32 bit value equates to roughly 4 billion). The security of the password is further enhanced by stretching the hashed value, i.e., hashing the hashed value, multiple times (e.g., 1000 times). Such repeated hashing makes pre-computed directory attacks computationally impossible.

The media drive 110 may in one aspect include logic for reading the password-protected media carrier 120 without the ability to add or change the password. The media drive may in other aspects include other subsets of the logic described herein, such as the access failure counting logic 139 or logic for adding the password but not for changing the password.

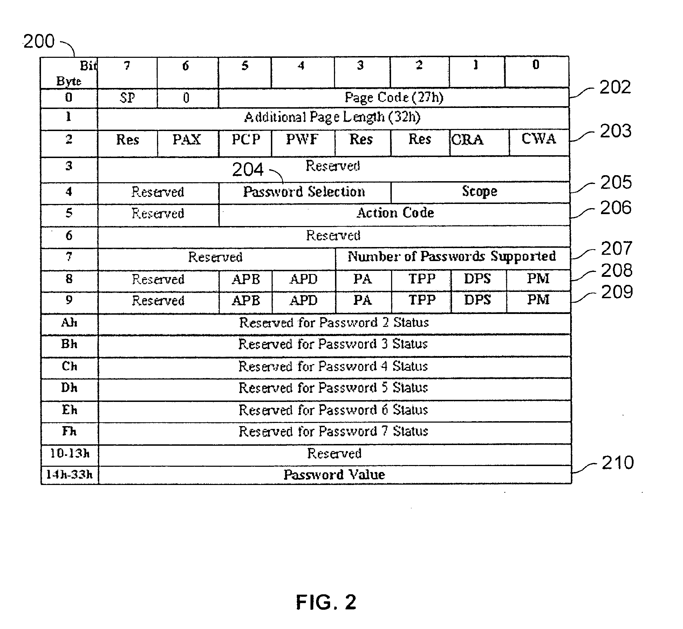

Figure 2 is an illustrative drawing of a data security mode page according to one embodiment of the invention. The data security mode page 200 includes control information for configuring and controlling the password protection functions of the media drive according to one embodiment of the invention. In one example, the mode page 200 is stored in memory in the format shown, but other similar or difference formats are possible. The specific memory layout and data sizes, e.g., a password length, shown in Figure 2 are exemplary. Other memory layouts containing the same information are possible, and the information, e.g., the password, may be of different sizes in different examples. The mode page 200 can be sent to and from the media drive by the host 105 via the link 107 or by automated programs via the automation interface described above with reference to Figure 1.

A MODE SELECT command is sent from the host 105 of Figure 1 (or other requesting interface) to the drive to cause the drive to operate in a specified mode, e.g., password protected or non-password-protected. Each MODE SELECT command sends the mode page 200 to the drive via the link 107 of Figure 1 with values provide by the host. If the mode page 200 associated with a MODE SELECT command is invalid or in error, the MODE SELECT command returns an error indication.

A MODE SENSE command is sent from the host 105 (or other requesting interface) to the drive to retrieve current mode settings for the drive via the link 107 of Figure 1. The MODE SENSE command returns the drive's current mode settings in the form of the mode page 200. The password is not sent in the MODE SENSE command.

The mode page 200 is a vendor-unique mode page, and includes a page code value 202, which has a constant value (27 hexadecimal) to specify that the mode page 200 is for password protection and has the format shown in Figure 2. The mode page 200 also includes a password protection status byte 203. which indicates the overall status of password protection in the drive, a host password status 208, an automation password status 209. and a password value 210.

In one example, the protection status byte 203 includes the Boolean values described in Table 1.

**Table 1**

| Flag | Description |
|---|---|
| **PAX** | Password Attempts Exceeded. This read only bit is set when the allowed number of attempts to unlock the cartridge with the correct password have been exceeded. The number of attempts allowed is 32 per cartridge per load. This bit is cleared when the cartridge is unloaded. When the number of password attempts has been exceeded the sense data reported when a medium access command is rejected, will change from Data Protect, Access Denied, Invalid Management ID Key to Data Protect, Access Denied, Password Attempts Exceeded. |
| **PCP** | Password Change Pending. This read only bit indicates that the desired tape password has been sent to the drive and is stored in drive memory but has not been written to tape. This bit is set anytime a tape is intended to be password protected with action codes 02 - Set Drive Password and write it to tape; 03 - Set Drive Password and write it to all blank tapes; and 04 - Set Drive Password and write it to all unprotected formatted tapes, and cleared by successful directory write or next load of the tape. |
| **PWF** | Password Write Failed. This read only bit indicates that the password that was pending to be written to tape was not written due to a write error. This bit is set from the time of unloading the failing cartridge until the load of the next cartridge. If this bit is 0 after unloading a tape then the password was successfully written to tape. The PCP bit is cleared when this bit is set. |
| **CRA** | Cartridge Read Access. This read only bit indicates if the cartridge can be accessed for reading by READ commands. |
| **CWA** | Cartridge Write Access. This read only bit indicates if the cartridge can be accessed for writing by WRITE commands |

A password selection field 204 selects the password to modify. Multiple tape passwords may be stored on the storage medium, and multiple drive passwords may be stored in the media drive to allow different users to be granted access to the tape independently. Two tape passwords are defined: a host read/write password, for use by the host 105 via the host interface 107 shown in Figure 1, and an automation read/write password for use by automated programs via the automation interface (not shown). The host read/write password can be selected in a MODE SELECT command by setting the password selection field 204 to 0, and the automation password can be selected by setting the field to 1. In a MODE SENSE command, the password selection field 204 will be set by the drive to the last password that was selected in a MODE SELECT for that drive.

A Scope of Password Protection field 205 determines who is allowed to access the drive in a multi-initiator environment. In one example, the scope is a global attribute which is used to prevent or allow other initiators to access the data on the drive. The scope field is reserved for use by the host interface. The automation interface may be prohibited from setting the scope field. The most recent scope value successfully set determines the current global scope for passwords. Illustrative values for the scope field 205 are shown in Table 2.

**Table 2**

| Scope | Description |
|---|---|
| 00 | Only allow this initiator to access the tape |
| 01 | Allow initiators with reservations to access the tape. Loss of reservation causes loss of access to tape. |
| 02 | Allow all initiators to access the tape. |

An action code field 206 indicates the desired password protection action. The most recent action value successfully processed by a MODE SELECT command determines the current password protection state of the drive. Illustrative values of this field are shown in Table 3.

**Table 3**

| Action | Description |
|---|---|
| 00 | No Action |
| 01 | Set Drive Password. This action can be done with or without a tape in the drive. If a tape is mounted and password protected, the value in the password field must match the password on the tape. The corresponding DPS bit is set and the APB, APD, PAX, PCP, and PWF bits are cleared. |
| 02 | Set the Drive Password and write it to tape. Tape must be mounted and either have no password or the value in the password field must match the password on the tape. The PCP bit is set until the password has been successfully written to tape. Upon successful completion of the MODE SELECT command, the PCP bit is set if the tape does not have a password. The APB, APD, PAX, and PWF bits are cleared. |
| 03 | Set Drive Password in drive memory and write it to blank tapes. This action sets the APB bit. This action code can be sent with or without a tape in the drive. The currently loaded tape, if it is blank, and subsequent blank tapes that are loaded into the drive will become password protected. If a tape is mounted and password protected, the value in the password field must match the password on the tape. The password will be written to the tape in conjunction with a WRITE, WRITE. FM, or ERASE command. If none of these commands are received prior to an UNLOAD command, the tape will not become formatted or Password Protected. Formatted and password protected tapes will not alter the APB state and will not be modified bv this action code. |
| 04 | Set Drive Password in drive memory and write it to unprotected/formatted tapes. This action sets the APD bit. The currently loaded tape, if it is unprotected/formatted, and subsequent unprotected/formatted tapes loaded into the drive will become password protected. If a tape is mounted and password protected, the value in the password field must match the password on the tape. The password will be written to the tape in conjunction with a WRITE, WRITE FM, ERASE, or UNLOAD command. Blank tapes and password protected tapes will not alter the APD state and will not be modified by this action code. |
| 05 | Set Drive Password and write it to unprotected tapes. Unprotected tapes will then automatically become password protected. This action sets the APB and APD bits. The currently loaded tape, if it is unprotected, and subsequent unprotected tapes loaded into the drive will become password protected. If a tape is mounted and password protected, the value in the password field must match the password on the tape. The password will be written to the tape in conjunction with a WRITE, ERASE, or UNLOAD command. Password protected tapes will not be modified by this action code. |
| 06 | Remove Password from the tape. Tape must be mounted and the drive password(s) must match the tape password(s). This action clears the APB, APD, and the appropriate TPP bits. The drive password is not cleared from drive memory. |
| 07 | Clear Drive Password. This action clears the APB, APD and corresponding DPS bits, and the password from drive memory. If a password protected tape is loaded, the appropriate PMM bit will be set. Password field is ignored. |

A Number of Passwords Supported field 207 field indicates the number of passwords supported. This field is read-only and is set to two by default: one for the host interface and one for the automation interface. However, the design in this example can handle up to 8 passwords.

The mode page 200 further includes a password status for each password. A host password status 208 and an automation password status 209 are shown in Figure 2. Each password status includes the fields shown in Table 4.

**Table 4**

| Field | Description |
|---|---|
| APB | Auto Password Blank Tapes. This read only bit indicates password protection mode for this password is set to auto-password protect all blank tapes. |
| APD | Auto Password Unprotected Data Tapes. This read only bit indicates password protection mode for this password is set to auto-password protect all unprotected/formatted tapes. |
| PA | Password Accessible on this interface. This read only status bit indicates if this password is accessible from this interface. |
| TPP | Tape Password Protected. This read only bit indicates if this tape is password protected with this password. |
| DPS | Drive Password Set. This read only bit indicates if the drive has a password set for this interface. |
| PM | Password Mismatch. This read only bit indicates that this password on the tape does not match this password set in the drive. |

The mode page 200 further includes a password field 210, which is the value of the selected password. In one example, the password field 210 is 32 bytes in length. The password field 210 is used to set the drive password to a desired value for the requesting interface. The password value is kept secret and will not be reported in MODE SENSE data. Instead, the password field 210 reported by the MODE SENSE command is all zeroes. For data read or write actions, i.e., actions other than 00 or 05), the password field 210 must have a non-zero value, or the command will be rejected. The drive password 118 of Figure 1 can be cleared using a MODE SELET command with action code 05 - Clear Drive Password

The drive password 210 and the Password Protection State 203 are stored in the drive's memory 116, shown in Figure 1. Passwords sent to the drive using action code 01, Set Drive Password, will be saved in the drive password memory location 118 of the drive's memory 116 for automatic password validation on future tape loads. The default values of the password 210 and Password Protection State 203 are zeroes. The drive password memory location 118 stores the password field 210 and the Password Protection State 203, which are reset to default values after a power-on reset. A device reset or bus reset does not reset the drive password memory location 118.

If the tape drive loses power between the time the password is written to drive RAM and the password is written to tape, the password will not be stored on the tape, the TPP bit will not be set, and the drive password memory location 118, including the Password Protection state 203, will be reset to 00 (none).

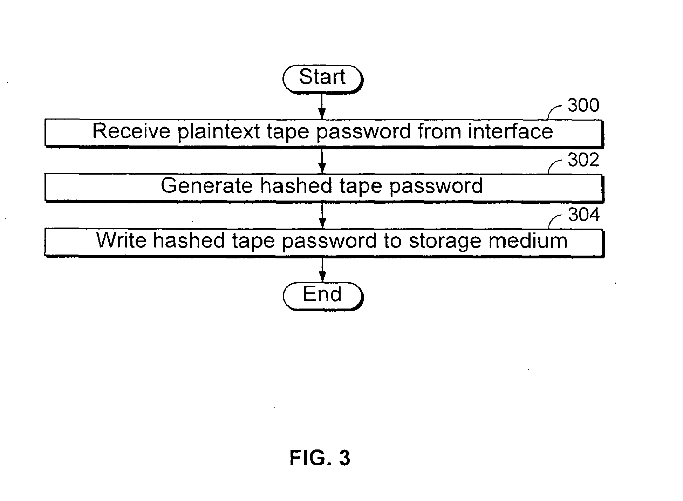

Figure 3 is a flowchart illustrating a method of storing a password on a storage medium according to one embodiment of the invention. This method is performed by logic in a media drive when the media drive receives a request to protect a storage medium with a password. This method can be carried out in software, firmware, hardware, or a combination thereof. In Block 300, the method receives a plaintext tape password from an interface such as the host interface 130 of Figure 1. In Block 302, the method generates a hashed tape password from the plaintext tape password using a hash function, e.g., SHA-256 or the like. In Block 304, the method writes the hashed tape password to the storage medium.

Prior to Block 300, the password(s) is sent to the drive's host interface 130 from, for example, the host 105, in a mode page associated with a MODE SELECT command. The password value will not be returned in response to a MODE SENSE command. The drive will create password protected tapes as instructed by the action code of the MODE SELECT command.

If the storage medium already has a password, a new password can be set by removing the existing password (using action code 06) and then writing the new password (using action codes 2-5).

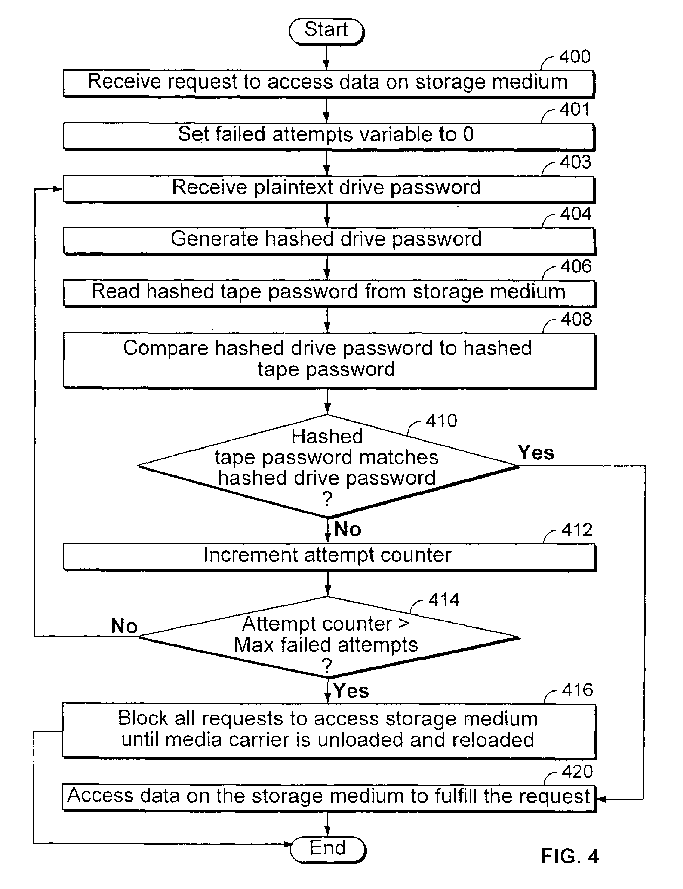

Figure 4 is a flowchart illustrating a method of accessing, i.e., reading or writing, data on a password-protected storage medium according to one embodiment of the invention. This method is performed by logic in a media drive when the media drive receives a request to access data on a storage medium. This method can be carried out in software, firmware, hardware, or a combination thereof.

The method begins at Block 400 by receiving a request to access data stored on the storage medium. At Block 401, the method sets an Attempt counter variable to zero. At Block 403, the method receives a plaintext drive password from the host or from the drive password memory location. At Block 404, the method generates a hashed drive password using a hash function, e.g., SHA-256 or the like, with the plaintext drive password as input. At Block 406, the method reads a hashed tape password from storage medium. At Block 408, the method compares the hashed drive password to the hashed tape password. At Block 410, a decision is made based on the result of the comparison in Block 408. At Block 410, if the hashed tape password matches the hashed drive password according to the comparison performed at block 408, then execution continues by allowing the access request at Block 420. Otherwise, if the hashed passwords do not match, execution continues at Block 412. At Block 412: an attempt counter (corresponding to the attempt counter 137 of Figure 1) is incremented. At Block 414, if the attempt counter is greater than a Max Failed Attempts threshold value, then execution continues at block 416. Otherwise, execution continues by waiting for another access request at Block 403.

Block 416 blocks all requests to access the storage medium in the media carrier until the media carrier is unloaded and reloaded. The method does not perform any further actions after executing Block 416 until the media carrier is unloaded. Then, if a subsequent request is made to read or write data, the method of Figure 4 is performed again from the start. If a subsequent request is made to store a password on a media carrier, the method of Figure 3 is performed. At Block 420, the request to access data on the storage medium is allowed and fulfilled by reading or writing data as requested, and returning the data to the host. If the media carrier is unloaded (i.e., ejected) from the drive at any time during execution of the method, then the method terminates by jumping to the End block as soon as possible.

The method of Figure 4 is typically performed by the drive to enforce password protection at the time a password-protected storage medium or tape is loaded, i.e., when a storage medium having a hashed tape password is inserted into the media drive ,or at any other time data is requested from a password-protected storage medium. If the method finds that the passwords match, the user can read and write data on the storage medium. If the passwords do not match, read and write type commands will be rejected and sense data will be presented to the initiator host until the correct password is provided to the drive using a MODE SELECT command. At the end of the load process there is a determination if the tape is password protected by checking the Tape Password Protected bits. If the tape is password protected, the password(s) on the tape will be compared to the password(s) in the drive. If the password(s) are equal, subsequent write and read operations are allowed.

A request to access data should include a password. The method of Figure 4 determines whether the password is valid. If the password is valid, then the media drive allows the host to access the data stored on the storage medium. If the password is not valid, then the host is not allowed to access the storage medium. If the passwords do not match, read and write operations will be rejected. If the tape is not password protected and the action code is to password protect the tape, then the passwords are written to tape at the next possible opportunity (when the tape is positioned at the begin of tape). In the event of a password mismatch, the following sense data shall be available on the interface: Data Protect, Access Denied, Invalid Management ID Key.

In the event of an attempt to disable a password protected tape or add a password to a non-protected tape when not at begin of tape, the following sense data will be available on the interface: Illegal request, Action not allowed away from Begin of Tape.

In the event of excessive attempts to select the correct password, when the number of password attempts has been exceeded the sense data will change from Data Protect, Access Denied, Invalid Management ID Key to Data Protect, Access Denied, Password Attempts Exceeded.

This disclosure is illustrative and not limiting; further modifications will be apparent to those skilled in the art in light of this disclosure and are intended to fall within the scope of the appended claims.

## Claims

1. A media drive for receiving a media carrier, comprising:
hashing logic for generating a hashed value based upon a plaintext value received by host interface logic; and
read-write logic operable to store a hashed tape password on a storage medium, wherein the hashed tape password is generated by the hashing logic based upon a plaintext password, and the storage medium is associated with the media carrier.

2. The media drive of claim 1, wherein the hashing logic comprises a hash function.

3. The media drive of claim 2, wherein the hash function comprises the Secure Hash Algorithm.

4. The media carrier of claim 1, wherein the storage medium comprises tape.

5. The media drive of claim 1, wherein the read-write logic is further operable to retrieve a previously-stored hashed tape password from the storage medium, further comprising:
password comparison logic operable to compare the previously-stored hashed tape password to a hashed drive password, wherein the hashed drive password is generated by the hashing logic based upon a plaintext drive password received by the host interface logic; and
data access logic for allowing a host to access data stored on the storage medium if the hashed tape password is equivalent to the hashed drive password.

6. The media drive of claim 5, wherein allowing the host to access data comprises allowing the host to read and write the data stored on the storage medium.

7. The media drive of claim 5. further comprising:
a memory having a drive password memory location for storing a drive password received by the host interface logic, wherein the hashed drive password is generated by the hashing logic further based upon the drive password stored in the memory location.

8. The media drive of claim 7, wherein the memory is a Random Access Memory.

9. The media drive of claim 1. wherein the read-write logic is further operable to retrieve the hashed tape password from the storage medium, further comprising:
a memory having a drive password memory location for storing a drive password received by the host interface logic;
password comparison logic operable to compare the hashed tape password retrieved from the storage medium to a hashed drive password, wherein the hashed drive password is generated by the hashing logic based upon the drive password stored in the memory location; and
data access logic for allowing a host to access data stored on the storage medium if the hashed tape password is equivalent to the hashed drive password.

10. The media drive of claim 5, further comprising:
an attempt counter operable to count the number of times an invalid plaintext drive password is received while a tape is loaded in the media drive;
wherein the data access logic is further operable to deny access to data stored on the storage medium if the counter is greater than a threshold value.

11. The media drive of claim 10, wherein the attempt counter is further operable to count the number of times an invalid plaintext drive password is received while a tape is loaded in the media drive, further comprising:
media carrier unload sensing logic operable to detect unloading of the media carrier from the media drive; and
access failure counting logic operable to increment the counter if the hashed tape password is not equivalent to the hashed drive password, and further operable to set the counter to zero if the media carrier is unloaded.

12. The media drive of claim 10, wherein the threshold value is 35.

13. A media drive for receiving a media carrier, comprising:
read-write logic operable to retrieve a hashed tape password from the storage medium;
a memory having a drive password memory location for storing a drive password received by host interface logic;
hashing logic for generating a hashed drive password based upon a plaintext drive password received by the host interface logic;
password comparison logic for determining if the hashed tape password matches the hashed drive password; and
data access logic for allowing a host to access data stored on the storage medium if the hashed tape password matches the hashed drive password.

14. The media drive of claim 13, wherein the hashing logic comprises a hash function.

15. The media drive of claim 14, wherein the hash function comprises the Secure Hash Algorithm.

16. A method for securely protecting a storage medium accessible by a media drive, comprising the steps of:
reading a plaintext tape password from a host;
generating a hashed tape password based upon the plaintext tape password; and
writing the hashed tape password to the storage medium.

17. A method for securely accessing data stored on a password-protected storage medium accessible by a media drive, comprising the steps of:
receiving a request to access data on a storage medium;
receiving a plaintext drive password;
generating a hashed drive password based upon the plaintext drive password;
reading a hashed tape password from the storage medium;
comparing the hashed drive password to the hashed tape password; and
if the hashed tape password matches the hashed drive password, accessing data on the storage medium to fulfill the request.

18. The method of claim 17, wherein the plaintext drive password is received from a host.

19. The method of claim 17, wherein the plaintext drive password is received from a drive password memory location.

20. The method of claim 17, wherein generating the hashed drive password is further based upon a hash function.

21. The method of claim 20, wherein the hash function is based upon the Secure Hash Algorithm.

22. The method of claim 17, further comprising the step of blocking access to the storage medium if more than a threshold number of invalid drive passwords are received.

23. The method of claim 22, wherein the threshold number is 35.

24. The method of claim 17, further comprising the step of denying access to the storage medium if more than a threshold number of invalid drive passwords are received between loading and subsequent unloading of the storage medium from the media drive.

25. A computer-readable medium storing computer code for executing the method of claim 16.

26. A computer-readable medium storing computer code for executing the method of claim 17.

27. A programmed computer that executes the method of claim 16.

28. A programmed computer that executes the method of claim 17.
